# EUROPEAN PATENT APPLICATION

(11) **EP 3 708 370 A1**
(43) Date of publication of application: **16.09.2020**
(21) Application number: 19163055.7
(22) Date of filing: 15.03.2019
(51) Int. Cl.: B33Y 70/00, B33Y 80/00, B33Y 10/00, B29C 64/165, C08F 22/32, C09J 4/00

(54) **3D-PRINTING METHOD USING GAS-ACTIVATED CYANOACRYLATES**

(71) Applicant: Henkel AG & Co. KGaA, 40589 Düsseldorf (DE)
(72) Inventor: Misiak, Hanns, 42781 Haan (DE); Zhao, Ligang, 40593 Düsseldorf (DE); Jans, Laurens, 3550 Heusden / Zolder (BE); Kinzelmann, Hans-Georg, 50259 Pulheim (DE)

(57) **Abstract**

Method for fabricating a three-dimensional object by dispensing an anionically polymerisable material and contacting with an activator in gaseous form.

## Description

The present invention is directed to a method for fabricating a three-dimensional object and to a three-dimensional object fabricated in a method according to the present invention.

Additive and subtractive manufacturing technologies enable computer designs, such as CAD files, to be made into three-dimensional (3D) objects. 3D printing, also known as additive manufacturing, typically comprises depositing, curing, fusing, or otherwise forming a material into sequential cross-sectional layers of the 3D object. For example, fused deposition modeling techniques, which are generally disclosed in U.S. Pat. No. 4,749,347 and U.S. Pat. No. 5,121,329, among others, include melting a filament of build material or print material and extruding the print material out of a dispenser (3D printer head or 3D printer extruder) that is moved in the x-, y-, and z-axes relative to a print pad. The print material is generally deposited in layers in the x- and y-axes to form cross-sectional layers that are stacked along the z-axis to form the 3D object.

In general, the material used for FDM type 3D printing systems is a thermoplastic compound or composition having a relatively low glass-transition temperature T_{g}, examples of which include acrylonitrile butadiene styrene (ABS), polylactic acid (PLA), high-impact polystyrene (HIPS), thermoplastic polyurethane (TPU), polypropylene (PP), and aliphatic polyamides (nylon). These thermoplastic polymers often have limitations in terms of interlayer adhesion, brittleness, warpage, or they require a high processing temperature. Moreover, thermoplastic materials are oftentimes too soft/flexible for mechanically demanding uses, such as automotive or medicinal applications.

Other methods of 3D printing rely on radiation cure (stereolithography), wherein a resin is photochemically solidified by an UV laser to form layers of the desired three-dimensional object. Apart from potentially high manufacturing costs, this method also suffers from poor cure properties in shadowed areas.

Thus, depending on the 3D printing method, the respective print material must meet certain chemical and/or physical criteria, generally setting limitations with respect to other material properties, such as color, transmittance, flexibility/stiffness, surface roughness, and the like of the finished object. Apart from the shortcomings already mentioned above, for instance, transparency in 3D printed objects usually requires post-processing, such as spray coating or resin coating.

Accordingly, there is need in the art for a 3D printing method overcoming the above-outlined drawbacks in that it is cost effective, fast yet well curing, providing for three-dimensional objects, which are relatively hard, colourless, and transparent.

This need is met by the object of the present invention, as provided herein is a method for the fabrication of a three-dimensional object using, as a print material, an anionically polymerizable, monomeric component composition, which is, upon contact with the gaseous form of an activator component, quickly and thoroughly cured. With the method according to the present invention, the fabrication of relatively hard, colourless, and transparent objects is possible, without the need for post-processing of the printed object.

In one aspect, the present invention thus relates to a method for fabricating a three-dimensional object, the method comprising:
A) dispensing an anionically polymerizable, monomeric component composition;
B) exposing said dispensed composition to the gaseous form of an activator component to induce curing of said composition; and, optionally,
C) repeating steps A) and B) at least once to form a three-dimensional object.

In another aspect, the present invention relates to a three-dimensional object fabricated in a method as described herein.

Embodiments of the present invention are described below, but the present invention is not limited thereto. It should be recognized that these embodiments are merely illustrative of the principles of the present invention. Numerous modifications and adaptations will be readily apparent to those of skill in the art without departing from the scope of the invention.

In the present specification, the terms "a" and "an" and "at least one" are the same as the term "one or more" and can be employed interchangeably.

The terms "3D (three dimensional) printer", "three-dimensional printing system," 3D-printing", "printing," and the like generally describe various solid freeform fabrication techniques for making three-dimensional (3D) articles or objects by selective deposition, jetting, fused deposition modeling, and other techniques now known in the art or that may be known in the future that use a build material or print material to fabricate the three-dimensional object.

As understood by one of ordinary skill in the art and as described further herein, 3D printing can include selectively depositing layers of a print material to form a 3D article on a substrate such as a print pad. Thus, the print material is deposited onto a build surface of a print pad. Any print pad not inconsistent with the objectives of the present invention may be used. Materials for print pads suitable for use in a method according to the present invention are known in the art and may be selected from, for instance, an aluminum print pad surface, a glass print pad surface and a polymeric print pad surface, such as a polycarbonate print surface.

Moreover, in some embodiments, production of a 3D object in a 3D printing method as described herein may also include the use of a support material in conjunction with the print material. The support material can be used to support at least one layer of the print material and can be used to form a variety of support structures, such as one or more fine points or a "raft." A raft, in some embodiments, can be essentially planar and can form a lower portion of a support structure in contact with the print pad, such that the raft is disposed between the print pad and the print material of the 3D article. However, unlike the print material, the support material is subsequently removed to provide the finished three-dimensional part. In some embodiments, the support material comprises the same material or has the same chemical composition as the print material. In other instances, the support material has a different chemical composition than the print material. Additionally, the print material and/or support material, in some embodiments, can be selectively deposited according to an image of the 3D article, the image being in a computer readable format. In some embodiments, the mehtode does not use a filling support material, preferably does not use any support material. One big advantage of this methode is that a support material is not necessary, since the gaseous activator leads to a fast hardening so that also bridging objects can be printed. An additional advantage of 3D printing without a support material is that no cleaning is necessary and no material is wasted.

In the method according to the present invention, a three-dimensional object may be formed from an anionically polymerizable, monomeric component composition, as described herein, which is cured upon activation with an activator component, as described herein. In a first step of the inventive method, an anionically polymerizable, monomeric component composition is dispensed.

According to some embodiments, the anionically polymerizable, monomeric component is selected from the group consisting of cyanoacrylate, methylenemalonate ester, dihalogen-substituted alkene, trihalogen-substituted alkene, tetrahalogen-substituted alkene, dicyano-substituted alkene, tricyano-substituted alkene, tetracyano-substituted alkene, alkene having 1,1-disubstitution with esters of sulfonic acid, alkene having 1,1-disubstitution with esters of phosphonic acid, alkene having 1,1-disubstitution with sulfone groups, alkene having 1,1-disubstitution with a cyano groug and an ester group, like 2-cyanopentadioates or 2-cyanohexadienoates, and combinations thereof.

According to certain embodiments, the anionically polymerizable, monomeric component is a cyanoacrylate.

Cyanoacrylate monomers suitable for use in a method according to the present invention are represented by the following structure: 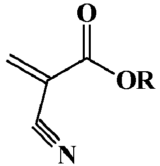 wherein R is selected from alkyl, alkoxyalkyl, cycloalkyl, alkenyl, alkynyl, aralkyl, aryl, allyl and haloalkyl groups each having from 1 to 16 carbon atoms. Preferably, the cyanoacrylate monomer is selected from methyl cyanoacrylate; ethyl-2-cyanoacrylate; propyl cyanoacrylates; butyl cyanoacrylates (such as n-butyl-2-cyanoacrylate); hexyl cyanoacrylate; octyl cyanoacrylates; allyl cyanoacrylate; β-methoxyethyl cyanoacrylate and combinations thereof.

A particularly desirable cyanoacrylate monomer is ethyl-2-cyanoacrylate.

According to certain other embodiments, the anionically polymerizable, monomeric component is a methylenemalonate ester. Methylenemalonate ester monomers, which may be employed in a method as described herein, include, without limitation, dimethyl methylenemalonate, diethyl methylenemalonate, di-n-propyl methylenemalonate, diisobutyl methylenemalonate, methyl ethyl methylenemalonate, di-n-butyl methylenemalonate, di-n-amyl methylenemalonate, di-Z-ethylhexyl methylenemalonate, di-n-octyl methylenemalonate methyl n-octyl methylenemalonate and related esters of methylenemalonic acid and combinations of the aforementioned.

According to other embodiments, the anionically polymerizable, monomeric component is a dihalogen-substituted alkene, examples of which include, without limitation, dihalogen-substituted derivatives of ethene, such as 1,1-dichloroethene; 1,1-difluoroethene; 1,1-dibromoethene; (*Z*)-1,2-dichloroethene; (*E*)-1,2-dichloroethene; (*Z*)-1,2-difluoroethene; (*E*)-1,2-difluoroethene; (*Z*)-1-chloro-2-fluoroethene; (*E*)-1-chloro-2-fluoroethene; (2,2-dichlorovinyl)benzene; (2,2-difluorovinyl)benzene; and (2,2-dibromovinyl)benzene.

According to other embodiments, the anionically polymerizable, monomeric component is a trihalogen-substituted alkene, examples of which include, without limitation, trihalogen-substituted derivatives of ethene, such as 1,1-dichloro-2-fluoroethene; 1,1-dichloro-2-bromoethene; (*E*)-1-Chloro-1,2-difluoroethene; and (*Z*)-1-Chloro-1,2-difluoroethene.

According to other embodiments, the anionically polymerizable, monomeric component is a tetrahalogen-substituted alkene, examples of which include, without limitation, tetrahalogen-substituted derivatives of ethene, such as 1,1,2,2-tetrachloroethene; 1,1,2,2-tetrafluoroethene; 1,1,2,2-tetrabromoethene; 1,1-dichloro-2,2difluoroethene; 1,1-dibromo-2,2-dichloroethene; 1-chloro-1-bromo-2,2-difluoroethene; (*E*)-1-bromo-2-chloro-1,2-difluoroethene; and (*Z*)-1-bromo-2-chloro-1,2-difluoroethene.

According to certain embodiments, the anionically polymerizable, monomeric component is a di-, tri-, or tetra-cyano-substituted alkene, examples of which include, without limitation, di-, tri-, or tetra-cyano-substituted derivatives of ethene, such as 1,1-dicyanoethene; (2,2-dicyanovinyl)benzene; 1,1,2-tricyanoethene; 1,1,2,2-tetracyanoethene; and 1,4-bis(2,2-dicyanoethenyl)benzene.

A particularly desirable cyano-substituted alkene is 1,1-dicyanoethene.

According to certain embodiments, the anionically polymerizable, monomeric component is an alkene having 1,1-disubstitution with esters of sulfonic acid, examples of which include, without limitation, dimethyl ethene-1,1-disulfonate; diethyl ethene-1,1-disulfonate; and diphenyl ethene-1,1-disulfonate.

According to certain embodiments, the anionically polymerizable, monomeric component is an alkene having 1,1-disubstitution with esters of phosphonic acid, examples of which include, without limitation, tetramethyl ethene-1,1-diylbis(phosphonate); tetraethyl ethene-1,1-diylbis(phosphonate); and tetraphenyl ethene-1, 1-diylbis(phosphonate).

According to certain embodiments, the anionically polymerizable, monomeric component is an alkene having 1,1-disubstitution with sulfone groups, examples of which include, without limitation, 1,1-bis(methylsulfonyl)ethylene; 1,1-bis(ethylsulfonyl)ethylene; and 1,1-bis(phenylsulfonyl)ethylene.

According to certain embodiments, the anionically polymerizable, monomeric component is an alkene having 1,1-disubstitution with a cyano groug and an ester group, examples of which include 2-cyanopentadioates or 2-cyanohexadienoates, preferably ethyl-2-cyanopentadioate and ethyl-2-cyanohexadienoate.

The anionically polymerizable, monomeric component compositions of the present invention may comprise one or more additives selected from the group consisting of stabilizers, accelerators (e.g. crown ethers, calixarenes, cyclodextrins, oligo- and poly- ethers), plasticizers, adhesion promoters, tougheners, fillers, opacifiers, thickeners, viscosity modifiers, inhibitors, thixotropy conferring agents, dyes, pigments, fluorescence markers, and thermal degradation reducers. These and other additives suitable for use in compositions to be employed in a method according to the present invention are known to those of skill in the art.

In particular, the employment of fillers and/or pigments or dyes may be desirable to yield opaque and/or coloured objects.

According to certain embodiments, the composition described herein is dispensed in the form of a bead. In some embodiments, the diameter of such a dispensed bead is between 0.01 and 5 mm, preferably between 0.05 and 1 mm. The dispensing may be accomplished either manually, that is, for instance and without limitation, from a syringe, as described in Example 1 of the present invention, or automatically, that is, for instance and without limitation, by use of a dispensing machine. In the context of the present invention and according to some embodiments, the dispensing of the anionically polymerizable, monomeric component composition may be accomplished by use of a 3D printer. According to some embodiments, a 3D printer suitable for application in a method as described herein is a fused deposition modeling (FDM) type 3D printer. 3D printing systems suitable for application in a method according to the present invention are well known in the field. According to certain embodiments, the anionically polymerizable, monomeric component composition is dispensed on a suitable surface. According to certain embodiments, a suitable surface may be a release surface, allowing for easy removal of the fabricated three-dimensional object. A preferred example of a suitable surface is a print pad surface, as defined herein. In particular, when using a 3D printer as a means of dispensing the anionically polymerizable, monomeric component composition, the anionically polymerizable, monomeric component composition is dispensed onto the build surface of a print pad.

In a second step, after the dispensing, the anionically polymerizable, monomeric component composition is exposed to the gaseous form of an activator component to induce curing of said composition.

In the context of the present invention, the activator component is a volatile nucleophilic species, which causes anionic polymerization of the anionically polymerizable, monomeric component composition, as described herein. Preferably, the activator component has a vapour pressure of around (at least) about 0.1 mBar at room temperature.

It is desirable that the activator component induces a fast cure and it is desirable to also induce a good cure-through-volume (CTV) in the anionically polymerizable, monomeric component composition. Preferably, solvent-free activator materials are employed. A skilled person will know which solvent-free activator materials are suitable for application in a method according to the present invention.

According to certain embodiments, the activator component is selected from the group consisting of volatile nucleophilic and/or alkaline components.

According to other embodiments, the activator component is selected from the group consisting of volatile amines and N-heterocycles, suitable examples of which include, without limitation, N,N-dimethylbenzylamine; *N,N*-diethyltoluidine; *N,N*-diethyl-*p*-toluidine; *N,N*-dimethylaniline; *N,N-*diethylalinine; *N,N*-dimethyl-*p*-toluidine; *N,N*-dimethyl-*m*-toluidine; *N,N*-dimethyl-*o*-toluidine; *N'-*benzyl-*N,N*-dimethylethylenediamine; *N*-benzylethylenediamine; *N*,*N*-diethyl-*N*'-phenylethylenediamine; *N,N'-*dibenzyl-*N*,*N'*-dimethylethylenediamine; *N,N'-*dibenzylethylenediamine; *N*,*N*-diethyl-*N'*,*N'*-dimethylethylenediamine; *N*,*N*,*N'*,*N'*-tetrakis(2-hydroxyethyl)ethylenediamine; *N*,*N*,*N'*,*N'*-tetrakis(2-hydroxypropyl)ethylenediamine; *N,N,N',N'-*tetraallylethylenediamine; *N,N,N',N'*-tetraethylethylenediamine; dimethylbenzylamine; pyridine; picoline; vinyl pyridine; 2-acetylpyridine; 4,7-dichloroquinoline; 5-nitroquinoline; 5-chloropyridine; 5-bromopyridine; 3,5-dichloropyridine; 3,5-dibromopyridine; 3-cyanopyridine and combinations thereof.

According to the present invention, the activator component will be contacted with the anionically polymerizable, monomeric component composition in the form of a vapour (gaseous) to activate the curable component. The gaseous form of the activator component may be contacted with said composition in the form of an air/activator mixture. It will be appreciated that a carrier gas other than air may be employed if desired. Any gas or mixture of gases is suitable in this context, also including mixtures with air. Accordingly, in some embodiments, the gaseous form of an activator component is comprised in a carrier gas.

To produce the gaseous form of activator component, as described herein, a controlled stream of air or gas may be passed over/through the volatile activator component. Means for providing the gaseous form of an activator component, as described herein, are detailed in European Patent Application No. 3144072, the content of which is incorporated herein by reference. For instance, an activator dispensing unit may be employed, comprising an air/gas inlet; optionally a gas flow meter, including a device for adjusting the gas flow rate; an activator cartridge, connected to the air/gas inlet and to an outlet suitable for expelling the gaseous form of the activator component in the form of a controlled and directed gas jet. By pumping a carrier gas, such as air or mixtures of air with other gases, through the inlet into the activator cartridge containing the volatile activator component, the desired gaseous form of activator is produced, which is then carried out of the cartridge and expelled through the outlet of the activator unit.

Initially, the activator will be provided either in solid or liquid form. In other words, according to certain embodiments, a source of the gaseous form of the activator component, as defined herein, is a volatile solid or liquid. Generally, for those activators which are in solid form, it is desirable that the materials are volatile (including materials which sublimate) to generate the desired gaseous form of the activator, as described herein.

Where the activator is in solid form, it may be provided in particles of any desired size, e.g. powder, pellets, and lumps. The solid activator may equally be provided in a predetermined shaped format, for example cast (at least partially) to a given shape or to the shape of a container, in which it is to be held. For example, the activator material may be shaped to follow an inner wall of the cartridge of the activator dispensing unit as detailed above. A mass of activator material may thus be provided in any predetermined shape. If desired, a retainer, holder or other barrier may be employed to hold the activator material within a desired position within such a container. This may also help to prevent non-gaseous forms from being inadvertently blown onto the dispensed anionically polymerizable, monomeric component composition, which is to be cured, as described herein.

Where the activator is provided in fluid form, for example in liquid form, the activator may be retained within a container, such as a cartridge, by a retainer, which is adapted to retain the activator component by adsorption and/or absorption.

According to some embodiments, the exposing of the dispensed anionically polymerizable, monomeric component composition to the gaseous form of the activator component is realized by directing a flow of the gaseous form of an activator component, as described herein, onto the dispensed anionically polymerizable, monomeric component composition. For instance, where the anionically polymerizable, monomeric component composition is dispensed by use of a 3D printer, said exposing is realized by directing a flow of the gaseous form of an activator component onto the composition dispensed by the dispensing unit of the 3D printer.

According to other embodiments, where the anionically polymerizable, monomeric component composition is dispensed by use of a 3D printer, said exposing may be realized by flooding the inner volume of a housing encasing at least the dispensing unit of a 3D printer with the gaseous form of an activator component, as described herein. In certain embodiments, the housing may have a stationary atmosphere including the activator component in gaseous form. Alternatively, the activator component may be provided as a moving volume of gas, such as a continuous or intermittent flow-through gas stream within the enclosure, such a gas jet, which is repeatedly injected into the enclosing chamber formed around the dispensing unit.

By exposing the anionically polymerizable, monomeric component composition, as described herein, to the gaseous form of an activator component, as described herein, said composition is cured by anionic polymerization, which is induced by the activator component. Thus, in a method according to the present invention, a three-dimensional object may be formed by repeating the steps of dispensing of the anionically polymerizable, monomeric component composition and exposing said composition to the gaseous form of an activator component. For instance, where a 3D-printing system is employed in the dispensing of the anionically polymerizable, monomeric component composition, layers of dispensed and subsequently cured print material may be formed on top of each other in the desired three-dimensional shape.

Accordingly, the present invention is also directed to a three-dimensional object fabricated in a method as described herein.

Following a method of fabrication as described herein, three-dimensional objects may be provided, which are thoroughly cured, relatively hard, colorless, and transparent and which have a neat and shiny surface.

### Examples

### Example 1

A three-dimensional object was fabricated by use of syringe. Repeatedly, beads of cyanoacrylate adhesive (ethyl-2-cyanoacrylate, Loctite 454) were manually dispensed on top of each other from the syringe and activated with a gas jet of 3,5-dichloropyridine in air using the activator dispensing unit as described in European Patent Application No. 3144072.

### Example 2

Using a dispensing machine, 12 layers of cyanoacrylate adhesive (ethyl-2-cyanoacrylate, Loctite 454) were deposited on top of each other. Activation of the adhesive was achieved by exposing each layer to a gas jet of 3,5-dichloropyridine in air by use of the activator dispensing unit as described in European Patent Application No. 3144072. A transparent, colourless three-dimensional object was formed.

### Example 3

Using a Musashi dispenser, 20 layers of cyanoacrylate adhesive (ethyl-2-cyanoacrylate, Loctite 454) were deposited on top of each other. Activation of the adhesive was achieved by exposing each layer to a gas jet of 3,5-dichloropyridine in air by use of the activator dispensing unit as described in European Patent Application No. 3144072. A transparent, colourless three-dimensional object was formed.

### Example 4

Using a Musashi dispenser, 10 layers of cyanoacrylate adhesive (ethyl-2-cyanoacrylate, Loctite 454) were deposited on top of each other. Activation of the adhesive was achieved by exposing each layer to a gas jet of 3,5-dichloropyridine in air by use of the activator dispensing unit as described in European Patent Application No. 3144072. A transparent, colourless three-dimensional object was formed. The object was printed on a release surface, allowing easy removal of the finished object.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination. The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. Method for fabricating a three-dimensional object, the method comprising:
A) dispensing an anionically polymerizable, monomeric component composition;
B) exposing said dispensed composition to the gaseous form of an activator component to induce curing of said composition; and, optionally,
C) repeating steps A) and B) at least once to form a three-dimensional object.

2. The method according to claim 1, wherein the activator component is a volatile nucleophilic species, which causes anionic polymerization of the anionically polymerizable, monomeric component composition.

3. The method according to claim 1 or claim 2, wherein the anionically polymerizable, monomeric component is selected from the group consisting of cyanoacrylate, methylenemalonate ester, dihalogen-substituted alkene, trihalogen-substituted alkene, tetrahalogen-substituted alkene, dicyano-substituted alkene, tricyano-substituted alkene, tetracyano-substituted alkene, alkene having 1,1-disubstitution with esters of sulfonic acid, alkene having 1,1-disubstitution with esters of phosphonic acid, alkene having 1,1-disubstitution with sulfone groups, and combinations thereof.

4. The method according to any one of claims 1 to 3, wherein the anionically polymerizable, monomeric component is a cyanoacrylate.

5. The method according to any one of claims 1 to 4, wherein the activator component is selected from the group consisting of volatile nucleophilic and/or alkaline components.

6. The method according to any one of claims 1 to 5, wherein the activator component is selected from the group consisting of volatile amines and N-heterocycles.

7. The method according to any one of claim 1 to 6, wherein the activator component is selected from the group consisting of: *N,N*-dimethylbenzylamine; *N,N*-diethyltoluidine; *N,N*-diethyl-*p-*toluidine; *N,N*-dimethylaniline; *N,N*-diethylalinine; *N,N*-dimethyl-*p*-toluidine; *N,N*-dimethyl-*m-*toluidine; *N,N*-dimethyl-*o*-toluidine; *N'*-benzyl-*N,N*-dimethylethylenediamine; *N-*benzylethylenediamine; *N,N*-diethyl-*N*'-phenylethylenediamine; *N,N'-*dibenzyl-*N,N'-*dimethylethylenediamine; *N,N'*-dibenzylethylenediamine; *N*,*N*-diethyl-*N'*,*N'-*dimethylethylenediamine; *N,N,N',N'*-tetrakis(2-hydroxyethyl)ethylenediamine; *N,N,N',N'-*tetrakis(2-hydroxypropyl)ethylenediamine; *N*,*N*,*N'*,*N'*-tetraallylethylenediamine; *N,N,N',N'-*tetraethylethylenediamine; dimethylbenzylamine; pyridine; picoline; vinyl pyridine; 2-acetylpyridine; 4,7-dichloroquinoline; 5-nitroquinoline; 5-chloropyridine; 5-bromopyridine; 3,5-dichloropyridine; 3,5-dibromopyridine; 3-cyanopyridine and combinations thereof.

8. The method according to any of claims 1 to 7, wherein the anionically polymerizable, monomeric component composition comprises one or more additives selected from the group consisting of stabilizers, accelerators, plasticizers, fillers, opacifiers, thickeners, viscosity modifiers, inhibitors, thixotropy conferring agents, dyes, pigments, fluorescence markers, and thermal degradation reducers.

9. The method according to any one of claims 1 to 8, wherein the gaseous form of an activator component is comprised in a carrier gas.

10. The method according to any one of claims 1 to 9, wherein the anionically polymerizable, monomeric component composition is dispensed in the form of a bead, wherein the diameter of the bead is between 0.01 and 5 mm, preferably between 0.05 and 1 mm.

11. The method according to any one of claims 1 to 10, wherein the dispensing of step A) is accomplished by use of a 3D printer and the anionically polymerizable, monomeric component composition is dispensed onto the build surface of a print pad.

12. The method according to claim 11, wherein the 3D printer is a fused deposition modeling (FDM) type 3D printer.

13. The method according to claim 11 or claim 12, wherein the exposing of the dispensed composition to the gaseous form of the activator component is realized by
i) directing a flow of the gaseous form of an activator component onto the dispensed anionically polymerizable, monomeric component composition; and/or
ii) flooding the inner volume of a housing encasing at least the dispensing unit of the 3D printer with the gaseous form of an activator component.

14. A three-dimensional object fabricated in a method according to any one of claims 1 to 13.
